# EUROPÄISCHE PATENTSCHRIFT

(11) **EP 1 521 907 B1**
(45) Veröffentlichungstag und Bekanntmachung des Hinweises auf die Patenterteilung: **05.01.2011**
(21) Anmeldenummer: 03762399.8
(22) Anmeldetag: 12.06.2003
(51) Int. Cl.: F02D 41/22

(54) **VERFAHREN ZUR ÜBERPRÜFUNG DER FUNKTIONSFÄHIGKEIT EINES UMGEBUNGSDRUCKSENSORS EINER BRENNKRAFTMASCHINE**
METHOD FOR CHECKING THE OPERABILITY OF AN AMBIENT PRESSURE SENSOR OF AN INTERNAL COMBUSTION ENGINE
PROCEDE POUR CONTROLER L'APTITUDE AU FONCTIONNEMENTD'UN CAPTEUR DE PRESSION AMBIANTE D'UN MOTEUR A COMBUSTION INTERNE

(30) Priorität: 09.07.2002 DE 10230834
(43) Veröffentlichungstag der Anmeldung: 13.04.2005
(73) Patentinhaber: ROBERT BOSCH GMBH, 70442 Stuttgart (DE)
(72) Erfinder: BEYER, Hans-Ernst, 74343 Sachsenheim (DE); DWORZAK, Uwe, 71254 Ditzingen (DE); KASTNER, Frank, 70435 Stuttgart (DE); EGE, Taskin, 71732 Tamm (DE); KRAEMER, Denis, 71706 Markgroeningen (DE)
(86) Internationale Anmeldenummer: PCT/DE2003/001961
(87) Internationale Veröffentlichungsnummer: WO 2004/005688

(56) Entgegenhaltungen:
- EP-A- 1 245 812
- DE-A- 19 745 698
- DE-C- 10 021 639
- US-A- 4 483 299

## Beschreibung

### Stand der Technik

Die Erfindung geht aus von einem Verfahren zum Betreiben einer Brennkraftmaschine, bei dem der Umgebungsdruck mittels eines Umgebungsdrucksensors und der Druck in einem Ansaugrohr der Brennkraftmaschine mittels eines Saugrohrdrucksensors ermittelt wird, und bei dem die Funktionsfähigkeit des Umgebungsdrucksensörs dadurch überprüft wird, dass der Umgebungsdruck mit einem Startwert verglichen wird, der vor einem Anlassvorgang der Brennkraftmaschine gewonnen wird.

Ein derartiges Verfahren ist aus der DE 100 21 639 C1 bekannt. Dort ist jedoch ein zusätzliches Signal, nämlich ein modellierte Saugrohrdruck erforderlich, um die Überprüfung des Umgebungsdrucksensors durchzuführen.

Aus der EP 1 245 812 A2 ist es bekannt, die Funktion eines Drucksensors zu überprüfen. Dies geschieht bei ausgeschaltetem Starter des Motors. Dabei wird von einem Umgebungsdrucksensor der Umgebungsdruck und ein von einem Saugrohrdrucksensor der Saugrohrdruck ermittelt. Der ermittelte Umgebungsdruck und der ermittelte Saugrohrdruck werden plausibilisiert. Es wird geprüft, ob der ermittelte Saugrohrdruck und der ermittelte Umgebungsdruck unzulässig voneinander abweichen.

### Aufgabe, Lösung und Vorteile der Erfindung

Aufgabe der Erfindung ist es, ein Verfahren zum Betreiben einer Brennkraftmaschine zu schaffen, mit dem eine einfache und trotzdem sichere Überprüfung des Umgebungsdrucksensors möglich ist. Diese Aufgabe wird bei einem Verfahren der eingangs genannten Art erfindungsgemäß durch die Merkmalskombination gemäß Anspruch 1 gelöst. Der Vergleich wird nur dann durchgeführt, wenn eine vorhergehende Überprüfung des Saugrohrdrucksensors zu dem Ergebnis führt, dass dieser funktionsfähig ist.

Erfindungsgemäß wird gewährleistet, dass die Überprüfung des Umgebungsdrucksensors nur dann durchgeführt wird, wenn der Saugrohrdrucksensor als funktionsfähig erkannt worden ist. Ist dies nicht der Fall, so ist keine Überprüfung des Umgebungsdrucksensors möglich. Die genannte Überprüfung wird somit erfindungsgemäß von einer oder mehreren Freigabebedingungen abhängig gemacht, die erfüllt sein müssen. Damit wird einerseits gewährleistet, dass die Überprüfung des Umgebungsdrucksensors wirklich immer zu einem korrekten Ergebnis führt. Andererseits bleibt durch die vorgeschalteten Freigabebedingungen das gesamte Verfahren einfach und überschaubar.

Weitere Merkmale, Anwendungsmöglichkeiten und Vorteile der Erfindung ergeben sich aus der nachfolgenden Beschreibung von Ausführungsbeispielen der Erfindung, die in den Figuren der Zeichnung dargestellt sind.

### Ausführungsbeispiele der Erfindung

Figur 1 zeigt ein schematisches Blockdiagramm eines Ausführungsbeispiels einer erfindungsgemäßen Brennkraftmaschine, und
Figuren 2 und 3 zeigen schematische Ablaufpläne eines Ausführungsbeispiels eines Verfahrens zum Betreiben der Brennkraftmaschine der Figur 1.

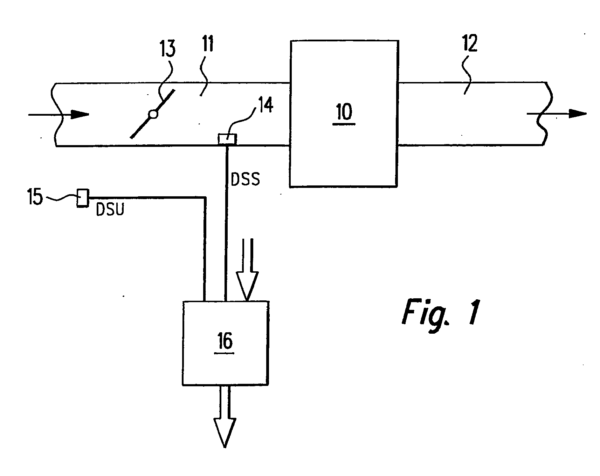

In der Figur 1 ist eine Brennkraftmaschine 10 dargestellt, die insbesondere für den Antrieb eines Kraftfahrzeugs vorgesehen ist. Die Brennkraftmaschine 10 ist mit einem Ansaugrohr 11 und einem Abgasrohr 12 versehen. In dem Ansaugrohr 11 ist eine Drosselklappe 13 untergebracht. Über das Ansaugrohr 11 wird der Brennkraftmaschine 10 Luft aus der Umgebung zugeführt. Die dabei zugeführte Luftmenge kann über die Drosselklappe 13 beeinflusst werden.

In Ansaugrichtung nach der Drosselklappe 13 ist in dem Ansaugrohr 11 ein Saugrohrdrucksensor 14 angeordnet, der zur Messung des Drucks in dem Ansaugrohr 11 vorgesehen ist. Außerhalb des Ansaugrohrs 11 ist ein Umgebungsdrucksensor 15 zur Messung des Umgebungsdrucks vorgesehen.

Der Saugrohrdrucksensor 14 erzeugt ein Signal DSS und der Umgebungsdrucksensor 15 erzeugt ein Signal DSU. Beide Signale DSS, DSU sind einem elektronischen Steuergerät 16 zugeführt, das unter anderem in Abhängigkeit von den Signalen DSS, DSU die Betriebsgrößen der Brennkraftmaschine 10 steuert und/oder regelt.

Zur Diagnose der Funktionsfähigkeit des Umgebungsdrucksensors 15 wird das folgende Verfahren von dem Steuergerät 16 durchgeführt. Das Verfahren ist als Computerprogramm auf einem elektronischen Speichermedium, beispielsweise auf einem Flash-Memory, abgespeichert und wird von einem Computer des Steuergeräts 16 durch Abarbeitung der einzelnen Programmbefehle ausgeführt.

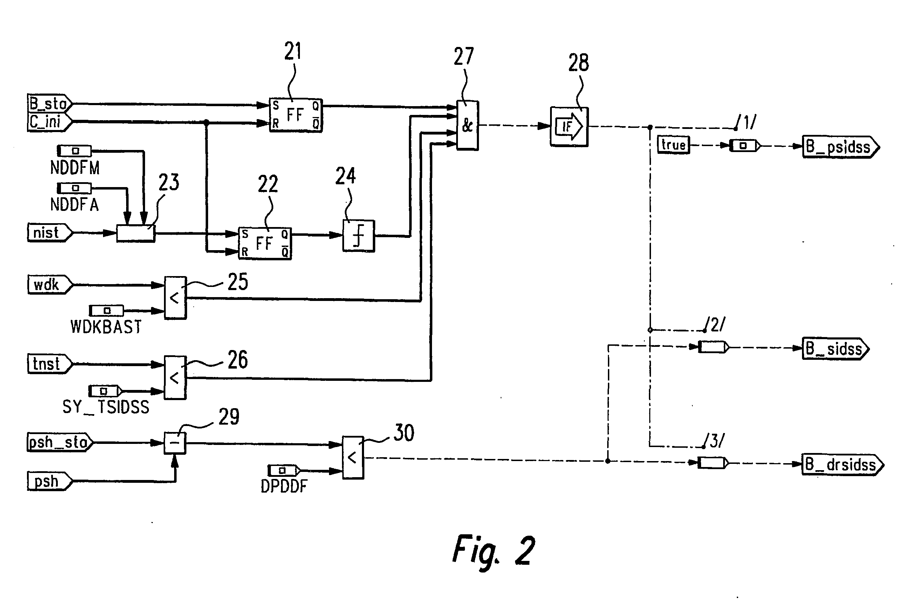

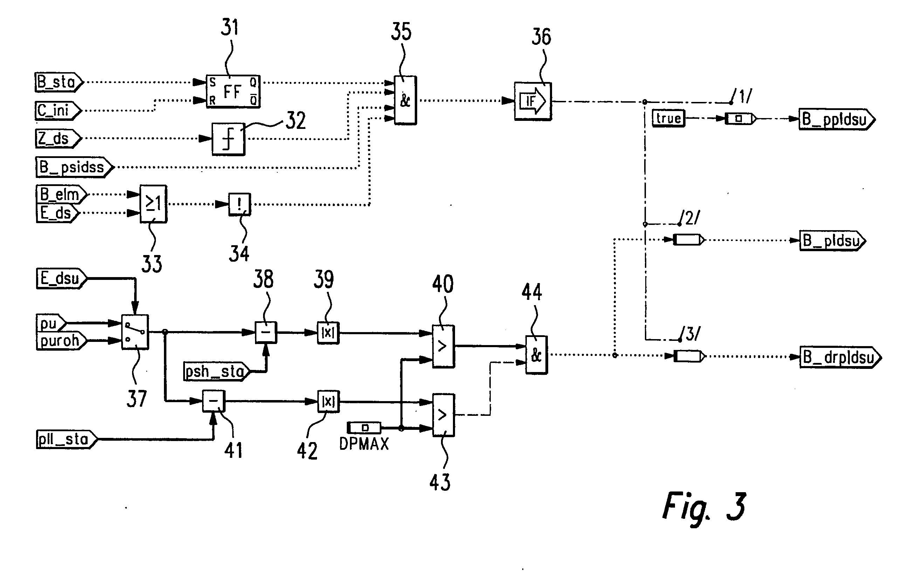

Bei dem genannten Verfahren werden zuerst Freigabebedingungen geprüft, um danach, sofern die Freigabebedingungen erfüllt sind, die Überprüfung des Umgebungsdrucksensors 15 vorzunehmen. Die Überprüfung der Freigabebedingungen wird nachfolgend anhand der Figuren 2 und 3 erläutert, die Überprüfung des Umgebungsdrucksensors 15 findet am Schluss in der Figur 3 statt.

In der Figur 2 ist ein Bit C_ini vorhanden, das eine positive Flanke aufweist, wenn die Zündung der Brennkraftmaschine 10 neu eingeschaltet wird. Die positive Flanke führt ganz allgemein dazu, dass das Steuergerät 16 initialisiert wird. Speziell führt die positive Flanke des Bits C_ini dazu, dass ein Flipflop 21 und ein Flipflop 22 der Figur 2 zurückgesetzt werden.

Das Flipflop 21 wird gesetzt, wenn ein Bit B_sta eine positive Flanke aufweist. Dies ist genau dann der Fall, wenn von dem Steuergerät 16 ein Anlassvorgang der Brennkraftmaschine 10 angestoßen wird. Dies ist der Fall, wenn bestimmte Anlassbedingungen erfüllt sind, z.B. muss von dem Fahrer der Anlassvorgang ausgelöst worden sein, eine Getriebeautomatik muss sich in einem Parkzustand befinden, und dergleichen.

Ist das Flipflop 21 durch das Bit B_sta gesetzt worden, so ist an dessen Ausgang ein Eins-Signal vorhanden.

Das Flipflop 22 wird gesetzt, wenn sich die Drehzahl der Brennkraftmaschine 10 in einem vorgegebenen Drehzahlbereich befindet. Dieser Drehzahlbereich ist dabei auf diejenige Ist-Drehzahl ausgerichtet, die die Brennkraftmaschine 10 beim Anlassvorgang haben sollte. Der Drehzahlbereich wird durch einen oberen Wert NDDFM und durch einen unteren Wert NDDFA festgelegt, die an einem Komparator 23 anliegen. Von dem Komparator 23 wird geprüft, ob sich die Ist-Drehzahl nist der Brennkraftmaschine 10 zwischen den beiden Werten NDDFM, NDDFA und damit innerhalb des erwünschten Drehzahlbereichs befindet.

Ist das Flipflop 22 auf diese Weise gesetzt worden, so ist an dessen Ausgang ein Eins-Signal vorhanden, dessen ansteigende Flanke über einen Flankendetektor 24 weitergegeben wird.

Der Ist-Winkel wdk der Drosselklappe 13 wird von einem Komparator 25 mit einem vorgegebenen maximalen Drosselklappenwinkel WDKBAST verglichen. Ist der Ist-Winkel WDK kleiner als dieser maximale Drosselklappenwinkel WDKBAST, so ist am Ausgang des Komparators 25 ein Eins-Signal vorhanden.

Die tatsächliche Zeitdauer tnst des Anlassvorgangs wird von einem Komparator 26 mit einer vorgegebenen maximalen Zeitdauer SY_TSIDSS verglichen. Ist die Zeitdauer tnst kleiner als diese maximale Zeitdauer SY_TSIDSS, so ist am Ausgang des Komparators 26 ein Eins-Signal vorhanden.

Die Ausgänge des Flipflops 21, des Flankendetektors 24 und der beiden Komparatoren 25, 26 sind einem UND-Gatter 27 zugeführt. Sind auf allen vier Eingängen des UND-Gatters 27 Eins-Signale vorhanden, so ist auch am Ausgang desselben ein Eins-Signal vorhanden.

Dies ist genau dann der Fall, wenn i) die Zündung der Brennkraftmaschine 10 neu eingeschaltet wird, ii) von dem Steuergerät 16 ein Anlassvorgang angestoßen wird, iii) sich die Ist-Drehzahl der Brennkraftmaschine 10 in einem erwünschten Drehzahlbereich befindet, iv) die Drosselklappe 13 nicht weiter als der maximale Drosselklappenwinkel geöffnet ist, und v) der Anlassvorgang die vorgegebene Zeitdauer noch nicht überschritten hat.

Dies ist ein erster Teil der bereits erwähnten Freigabebedingungen, die erfüllt sein müssen, damit die Überprüfung des Umgebungsdrucksensors 15 durchgeführt wird. Sofern die Bedingungen erfüllt sind und am Ausgang des UND-Gatters 27 ein Eins-Signal vorhanden ist, wird dies von der Funktion 28 erkannt und im Rahmen der in der Figur 2 mit /1/, /2/ und /3/ gekennzeichneten Maßnahmen weiterverarbeitet.

Bei der Maßnahme /1/ wird ein Bit B_psidss auf "true = Eins-Signal" gesetzt, das angibt, ob die Überprüfung des Umgebungsdrucksensors 15 stattfinden kann. Dies ist somit genau dann der Fall, wenn alle Freigabebedingungen erfüllt sind und der Ausgang des UND-Gatters 27 ein Eins-Signal aufweist.

Die Maßnahmen /2/ und /3/ betreffen den Saugrohrdrucksensor 14. Aus dessen Signal DSS wird von dem Steuergerät 16 ein Druck psh im Ansaugrohr 11 erzeugt.

Vor einem Anlassvorgang der Brennkraftmaschine 10, also im abgeschalteten Zustand der Brennkraftmaschine 10, entspricht der Druck psh im Ansaugrohr 11 und insbesondere auch der Druck nach der Drosselklappe 13 aufgrund des Stillstands der Brennkraftmaschine 10 etwa dem Umgebungsdruck. Dies ist gleichbedeutend damit, dass der von dem Saugrohrdrucksensor 14 vor einem Anlassvorgang gemessene Druck psh etwa dem Umgebungsdruck entspricht. Dieser von dem Saugrohrdrucksensor 14 vor dem Anlassvorgang gemessene Druck psh kann damit zur Diagnose des Umgebungsdrucksensors 15 herangezogen werden.

Zu diesem Zweck wird der vor dem Anlassvorgang von dem Saugrohrdrucksensor 14 gemessene Druck psh von dem Steuergerät 16 als Startwert psh_sta abgespeichert. Die Abspeicherung kann dabei bis zum Anlassvorgang, insbesondere bis zur Bestromung des Anlassers vorgenommen werden.

Gemäß der Figur 2 wird der aktuelle Druck psh im Ansaugrohr 11 von dem abgespeicherten Startwert psh_sta mittels eines Blocks 29 subtrahiert. Die Differenz wird dann von einem Komparator 30 mit einem vorgegebenen Minimalwert DPDDF verglichen. Ist die Differenz kleiner als der Minimalwert DPDDF, so weist der Ausgang des Komparators 30 ein Eins-Signal auf.

Bei dieser Prüfung wird davon ausgegangen, dass der Druck im Ansaugrohr 11 nach dem Beginn des Anlassvorgangs stark abfällt. Die Differenz zwischen dem aktuellen Druck psh und dem abgespeicherten Startwert psh_sta muss damit groß sein. Ist dies der Fall, wird also der Minimalwert DPDDF überschritten, so wird daraus auf die Funktionsfähigkeit des Saugrohrdrucksensors 14 geschlossen.

Das Eins-Signal am Ausgang des Komparators 30 hat zur Folge, dass die Bits B_sidss und B_drsidss zu "true = Eins-Signal" gesetzt werden. Dies ist gleichbedeutend mit einem Defekt des Saugrohrdrucksensors 14. Ist am Ausgang des Komparators 30 kein Eins-Signal vorhanden, so werden die vorgenannten Bits zu "false = kein Eins-Signal" gesetzt, was die Funktionsfähigkeit des Saugrohrdrucksensors 14 kennzeichnet.

Das Bit B_sidss ist für eine Weiterverarbeitung durch das Steuergerät 16 vorgesehen. Unter anderem basieren die nachfolgend erläuterten Bits B_elm und E_ds auf diesem Bit B_sidss. Das Bit B_drsidss wird abgespeichert und kann beispielsweise im Zusammenhang mit einer Inspektion oder Reparatur der Brennkraftmaschine 10 dazu verwendet werden, die Prüfperson auf den defekten Saugrohrdrucksensor 14 hinzuweisen.

Es wird nochmals darauf hingewiesen, dass die Maßnahmen /1/, /2/ und /3/ nur ausgeführt werden, wenn die beschriebenen Freigabebedingungen erfüllt sind und an dem Ausgang des UND-Gatters 27 ein Eins-Signal vorhanden ist.

In der Figur 3 ist ein Flipflop 31 vorhanden, das die Bits B_sta und C_ini in der gleichen Weise verarbeitet, wie dies im Zusammenhang mit dem Flipflop 21 der Figur 2 bereits erläutert worden ist. Am Ausgang des Flipflops 31 ist somit ein Eins-Signal vorhanden, wenn die Zündung neu eingeschaltet worden ist, und wenn ein Anlassvorgang angestoßen worden ist.

Einem Flankendetektor 32 ist ein Bit Z_ds zugeführt, das angibt, ob eine Diagnose des Saugrohrdrucksensors 14 durchgeführt worden ist. Ist dies der Fall, so ergibt sich am Ausgang des Flankendetektors 32 ein Eins-Signal. Bei der Diagnose des Saugrohrdrucksensors 14 kann es sich dabei nicht nur um die Überprüfung des aktuellen Drucks psh und des abgespeicherten Startwerts psh_sta handeln, wie dies im Zusammenhang mit den Maßnahmen /2/ und /3/ der Figur 2 erläutert worden ist. Statt dessen kann es sich dabei um jegliche alternative oder ergänzende Prüfung handeln, mit der die Funktionsfähigkeit des Saugrohrdrucksensors 14 geprüft werden kann.

Das in der Figur 3 angegebene Bit B_psidss entspricht demselben Bit, das im Zusammenhang mit der Maßnahme /1/ der Figur 2 erläutert worden ist.

Weiterhin ist in der Figur 3 ein ODER-Glied 33 vorhanden, dem die bereits erwähnten Bits B_elm und E_ds zugeführt sind. Liegt an einem der beiden Eingänge des ODER-Glieds ein Eins-Signal an, so bedeutet dies, dass im Zusammenhang mit dem Saugrohrdrucksensor 14 ein Fehler vorhanden ist. Der Ausgang des ODER-Glieds 33 führt damit auch ein Eins-Signal. Der nachfolgende Inverter 34 hat zur Folge, dass an dessen Ausgang dann kein Eins-Signal vorhanden ist.

Im umgekehrten Fall, also wenn der Saugrohrdrucksensor 14 funktionsfähig ist, sind an den Eingängen des ODER-Glieds 33 keine Eins-Signale vorhanden, so dass dessen Ausgang ebenfalls kein Eins-Signal aufweist. Der Ausgang des Inverters 34 führt damit ein Eins-Signal.

Die Ausgänge des Flipflops 31, des Flankendetektors 32, des Inverters 34 sowie das Bit B_psidss sind einem UND-Gatter 35 zugeführt. Sind auf allen vier Eingängen des UND-Gatters 35 Eins-Signale vorhanden, so ist auch am Ausgang desselben ein Eins-Signal vorhanden.

Dies ist genau dann der Fall, wenn i) die Zündung der Brennkraftmaschine 10 neu eingeschaltet wird, ii) von dem Steuergerät 16 ein Anlassvorgang angestoßen wird, iii) eine Überprüfung des Saugrohrdrucksensors 14 durchgeführt worden ist, iv) die im Zusammenhang mit der Figur 2 erläuterten Freigabebedingungen erfolgreich erfüllt worden sind, und v) der Saugrohrdrucksensor 14 funktionsfähig ist.

Dies ist ein zweiter Teil der bereits erwähnten Freigabebedingungen, die erfüllt sein müssen, damit die Überprüfung des Umgebungsdrucksensors 15 durchgeführt wird. Sofern die Bedingungen erfüllt sind und am Ausgang des UND-Gatters 35 ein Eins-Signal vorhanden ist, wird dies von der Funktion 36 erkannt und im Rahmen der in der Figur 3 mit /1/, /2/ und /3/ gekennzeichneten Maßnahmen weiterverarbeitet.

Bei der Maßnahme /1/ wird ein Bit B_ppldsu auf "true = Eins-Signal" gesetzt, das angibt, dass die Überprüfung des Umgebungsdrucksensors 15 stattfinden kann. Dies ist somit genau dann der Fall, wenn alle Freigabebedingungen der Figur 2 sowie alle vorstehenden Freigabebedingungen der Figur 3 erfüllt sind und der Ausgang des UND-Gatters 35 ein Eins-Signal aufweist.

Die Maßnahmen /2/ und /3/ betreffen die Überprüfung des Umgebungsdrucksensors 15. Diese Überprüfung wird nachfolgend erläutert.

Aus dem Signal DSU des Umgebungsdrucksensors 15 erzeugt das Steuergerät 16 einen Umgebungsdruck pu. Ebenfalls liegt in dem Steuergerät 16 ein Signal puroh vor, bei dem es sich um den ungefilterten und nicht-plausibilisierten Umgebungsdruck handelt. Weiterhin führt das Steuergerät 16 Prüfungen durch, mit denen es feststellt, ob das Signal DSU des Umgebungsdrucksensors 15 überhaupt sinnvoll bzw. plausibel ist. Das Ergebnis dieser Prüfung liegt als Bit E_dsu vor.

Der Umgebungsdruck pu und das Signal puroh sind einem Umschalter 37 zugeführt, der von dem Bit E_dsu gesteuert wird. Zeigt das Bit E_dsu an, dass der Umgebungsdrucksensor 15 ein plausibles Signal DSU liefert, dann wird der von dem Umgebungsdrucksensor 15 abgeleitete Umgebungsdruck pu von dem Umschalter 37 weitergegeben. Ist dies nicht der Fall, so wird das Signal puroh weitergegeben.

Es wird nunmehr angenommen, dass der erstgenannte Fall gegeben ist, und dass deshalb am Ausgang des Umschalters 37 der vom Umgebungsdrucksensor 15 abgeleitete Umgebungsdruck pu vorhanden ist.

Von dem Umgebungsdruck pu wird gemäß der Figur 3 mittels eines Blocks 38 der abgespeicherte Startwert psh_sta subtrahiert. Mittels eines Blocks 39 wird von der Differenz der Betrag gebildet. Dieses Ergebnis wird von einem Komparator 40 mit einem Maximalwert DPMAX verglichen. Ist der Betrag der Differenz zwischen dem Umgebungsdruck pu und dem abgespeicherten Startwert psh_sta größer als der Maximalwert DPMAX, dann ist am Ausgang des Komparators 40 ein Eins-Signal vorhanden.

Dem vorstehenden Vorgehen liegt die bereits erwähnte Überlegung zugrunde, dass der von dem Saugrohrdrucksensor 14 vor dem Anlassvorgang gemessene und dann abgespeicherte Startwert psh_sta etwa dem Umgebungsdruck entspricht. Wenn somit anhand der Freigabebedingungen festgestellt wird, dass der Saugrohrdrucksensor 14 nicht defekt ist, und dass ein korrekter Anlassvorgang stattgefunden hat, dann muss nach diesem Anlassvorgang der von dem Umgebungsdrucksensor 15 abgeleitete Umgebungsdruck pu etwa dem abgespeicherten Startwert psh_sta entsprechen.

Dies bedeutet jedoch gleichzeitig, dass der Betrag der Differenz zwischen dem Umgebungsdruck pu und dem Startwert psh_sta nur sehr klein sein darf. Dies wird durch den Vergleich mit dem Maximalwert DPMAX geprüft. Ist der Maximalwert DPMAX nicht überschritten, dann wird auf keinen Defekt des Umgebungsdrucksensors 15 geschlossen, was durch ein Null-Signal am Ausgang des Komparators 40 angezeigt wird. Ist der Maximalwert DPMAX jedoch überschritten, so wird auf einen Fehler des Umgebungsdrucksensors 15 geschlossen und es liegt ein Eins-Signal am Ausgang des Komparators 40 an.

Im Falle einer aufgeladenen Brennkraftmaschine 10 wird von dem Umgebungsdruck pu gemäß der Figur 3 auch ein Startwert pll_sta mittels eines Blocks 41 subtrahiert. Der Startwert pll_sta ist vergleichbar mit dem Startwert psh_sta. Beide Startwerte werden vor dem Anlassvorgang gemessen und dann abgespeichert. Bei beiden Startwerten wird dabei davon ausgegangen, dass sie aufgrund ihrer Messung vor dem Anlassvorgang etwa dem Umgebungsdruck entsprechen. Der Startwert psh_sta wird, wie erläutert wurde, mittels des Saugrohrdrucksensors 14 gemessen, während der Startwert pll_sta mittels eines Ladeluftdrucksensors gemessen wird, der innerhalb derjenigen Vorrichtung angeordnet ist, die der Aufladung der Brennkraftmaschine 10 dient.

Von der Differenz zwischen dem Umgebungsdruck pu und dem abgespeicherten Startwert pll_sta wird mittels eines Blocks 42 der Betrag gebildet. Danach wird dieses Ergebnis mittels eines Komparators 43 mit dem bereits erwähnten Maximalwert DPMAX verglichen. Überschreitet der Betrag der Differenz zwischen dem Umgebungsdruck pu und dem Startwert pll_sta nicht den Maximalwert DPMAX, so wird daraus auf die Funktionsfähigkeit des Umgebungsdrucksensors 15 geschlossen und es liegt am Ausgang des Komparators 43 ein Null-Signal an.

Die Ausgänge des Komparators 40 und des Komparators 43 beaufschlagen ein UND-Gatter 44. Liegen an den beiden genannten Ausgängen Eins-Signale an, so weist auch der Ausgang des UND-Gatters 44 ein Eins-Signal auf.

Es wird darauf hingewiesen, dass die beschriebene Überprüfung anhand des abgespeicherten Startwerts pll_sta, also anhand des Ladeluftdrucks einer aufgeladenen Brennkraftmaschine 10, eine Möglichkeit darstellt, die auch entfallen kann. In diesem Fall sind die Blöcke 41, 42, 43 und 44 nicht vorhanden. Ebenfalls ist es möglich, dass bei sämtlichen Funktionen und Maßnahmen, die vorliegend im Zusammenhang mit dem Saugrohrdrucksensor 14 erläutert worden sind bzw. noch erläutert werden, der genannte Saugrohrdrucksensor 14 durch den genannten Ladeluftdrucksensor ersetzt wird. In diesem Fall stellt der Ladeluftdrucksensor im Hinblick auf die Überprüfung des Umgebungsdrucksensors eine Alternative zu dem Saugrohrdrucksensor 14 dar.

Ein Eins-Signal am Ausgang des UND-Gatters 44 hat zur Folge, dass die Bits B_pldsu und B_drpldsu zu "true = Eins-Signal" gesetzt werden. Dies ist gleichbedeutend mit einem Defekt des Umgebungsdrucksensors 15. Ist am Ausgang des UND-Gatters 44 kein Eins-Signal vorhanden, so werden die vorgenannten Bits zu "false = kein Eins-Signal" gesetzt, was die Funktionsfähigkeit des Umgebungsdrucksensors 15 kennzeichnet.

Das Bit B_pldsu ist für eine Weiterverarbeitung durch das Steuergerät 16 vorgesehen. Das Bit B_drpldsu wird abgespeichert und kann beispielsweise im Zusammenhang mit einer Inspektion oder Reparatur der Brennkraftmaschine 10 dazu verwendet werden, die Prüfperson auf den defekten Umgebungsdrucksensor 15 hinzuweisen.

Es wird nochmals darauf hingewiesen, dass die Maßnahmen /1/, /2/ und /3/ der Figur 3 nur ausgeführt werden, wenn die beschriebenen Freigabebedingungen der Figuren 2 und 3 erfüllt sind und an dem Ausgang des UND-Gatters 35 ein Eins-Signal vorhanden ist.

Ist der Umgebungsdrucksensor 15 als defekt erkannt worden, so ist es möglich, den an sich von dem Umgebungsdrucksensor 15 abgeleiteten Umgebungsdruck pu anderweitig zu ersetzen. Dies kann dadurch erfolgen, dass, sofern der Saugrohrdrucksensor 14 als funktionsfähig erkannt worden ist, der Startwert psh_sta, also der Druck im Ansaugrohr 11 vor dem Anlassvorgang, als konstanter Umgebungsdruck weiterverwendet wird. Dieser Ersatz des Umgebungsdrucks pu durch den Startwert psh_sta kann dann nach jedem Anlassvorgang erneut vorgenommen werden. Sollte dabei der Umgebungsdrucksensor 15 wieder als funktionsfähig erkannt werden, so kann der vorstehende Ersatz wieder rückgängig gemacht werden.

Das beschriebene Verfahren ist nicht nur zur Überprüfung des Umgebungsdrucksensors 15 geeignet, sondern ganz allgemein zur Überprüfung jeglichen Drucksensors, der zumindest vor dem Anlassvorgang der Brennkraftmaschine 10 mit der Umgebung derselben in Verbindung kommt. So ist beispielweise ein Ladeluftdrucksensor oder ein Luftfilterdrucksensor dazu geeignet, vor dem Anlassvorgang der Brennkraftmaschine 10 einen Umgebungsdruck zu erfassen. Dieser Umgebungsdruck kann dann entsprechend der vorliegenden Beschreibung mit dem von dem Saugrohrdrucksensor 14 ermittelten Startwert psh_sta verglichen werden (Block 38). Daraus kann dann auf die Funktionsfähigkeit des Ladeluftdrucksensors oder des Luftfilterdrucksensor geschlossen werden (Block 40).

## Patentansprüche

1. Verfahren zum Betreiben einer Brennkraftmaschine (10), bei der ein Drucksensor (15) vorgesehen ist, der vor einem Anlassvorgang der Brennkraftmaschine (10) mit der Umgebung in Verbindung steht, bei dem von dem Drucksensor (15) ein zugehöriger Druck (pu) ermittelt wird, bei dem ein Druck (psh) in einem Ansaugrohr (11) der Brennkraftmaschine (10) mittels eines Saugrohrdrucksensors (14) ermittelt wird, und bei dem die Funktionsfähigkeit des Drucksensors (15) **dadurch** überprüft wird, dass der von dem Drucksensor (15) ermittelte Druck (pu) mit einem Startwert (psh_sta) verglichen wird (Block 38), der vor dem Anlassvorgang der Brennkraftmaschine (10) mittels des Saugrohrdrucksensors (14) gewonnen wird, wobei der Vergleich nur dann durchgeführt wird, wenn eine vorhergehende Überprüfung des Saugrohrdrucksensors (14) zu dem Ergebnis führt, dass dieser funktionsfähig ist (B_sidss, B_drsidss), **dadurch gekennzeichnet, dass** die Überprüfung der Funktionsfähigkeit des Drucksensors (15) nur dann vorgenommen wird, wenn ein Anlassvorgang der Brennkraftmaschine (10) angestoßen wurde.

2. Verfahren nach Anspruch 1, **dadurch gekennzeichnet, dass** als Drucksensor ein Umgebungsdrucksensor (15) vorgesehen ist.

3. Verfahren nach Anspruch 2, **dadurch gekennzeichnet, dass** die Überprüfung der Funktionsfähigkeit des Umgebungsdrucksensors (15) nur dann vorgenommen wird, wenn zusätzlich eine oder mehrere der folgenden Freigabebedingungen erfüllt sind (B_psidss): i) die Zündung der Brennkraftmaschine (10) ist neu eingeschaltet worden, ii) die Ist-Drehzahl (nist) der Brennkraftmaschine (10) befindet sich in einem erwünschten Drehzahlbereich, iii) eine Drosselklappe (13) der Brennkraftmaschine (10) ist nicht weiter geöffnet als ein maximaler Drosselklappenwinkel (WDKBAST), iv) der Anlassvorgang hat eine vorgegebene Zeitdauer (SY_TSIDSS) noch nicht überschritten.

4. Verfahren nach einem der Ansprüche 2 oder 3, **dadurch gekennzeichnet, dass** zur Überprüfung des Saugrohrdrucksensors (14) ein Startwert (psh_sta) vor dem Anlassvorgang der Brennkraftmaschine (10) mittels des Saugrohrdrucksensors (14) erfasst und abgespeichert wird, dass dieser Startwert (psh_sta) nach dem Anlassvorgang mit dem Druck (psh) im Ansaugrohr (11) verglichen wird, und dass der Saugrohrdrucksensor (14) als funktionsfähig erkannt wird, wenn die Differenz des Startwerts (psh_sta) und des Drucks (psh) einen Minimalwert (DPDDF) überschreitet.

5. Verfahren nach einem der Ansprüche 2 bis 4, **dadurch gekennzeichnet, dass** der Vergleich des Umgebungsdruckes (pu) mit dem Startwert (psh_sta) (Block 38) nur dann durchgeführt wird, wenn zusätzlich die folgende Freigabebedingung erfüllt ist (B_ppldsu): die Zündung der Brennkraftmaschine (10) ist neu eingeschaltet worden.

6. Verfahren nach einem der Ansprüche 2 bis 5, **dadurch gekennzeichnet, dass** der Umgebungsdrucksensor (15) als funktionsfähig erkannt wird, wenn die Differenz des Startwerts (psh_sta) und des Umgebungsdruck (pu) einen Maximalwert (DPMAX) nicht überschreitet.

7. Verfahren nach einem der Ansprüche 2 bis 6, **dadurch gekennzeichnet, dass** bei einer erkannten Fehlfunktion des Umgebungsdrucksensors (15) der gespeicherte Startwert (psh_sta) als Umgebungsdruck verwendet wird.

8. Verfahren nach einem der Ansprüche 2 bis 7, **dadurch gekennzeichnet, dass** ergänzend und/oder alternativ zu dem von dem Saugrohrdrucksensor (14) abgeleiteten und gespeicherten Startwert (psh_sta) ein von einem Ladeluftdrucksensor abgeleiteter und vor dem Anlassvorgang abgespeicherter Startwert (pll_sta) verwendet wird.

9. Verfahren nach Anspruch 1, **dadurch gekennzeichnet, dass** als Drucksensor ein Ladeluftdrucksensor oder ein Luftfilterdrucksensor oder dergleichen vorgesehen ist.

10. Computerprogramm mit Programmbefehlen, die alle Schritte des Verfahrens nach einem der vorstehenden Ansprüche durchführen, wenn sie auf einem Computer ausgeführt werden.

11. Computerprogramm nach Anspruch 10, das auf einem elektronischen Speichermedium, insbesondere einem Flash-Memory abgespeichert ist.

12. Steuergerät (16) für eine Brennkraftmaschine (10), bei der der Umgebungsdruck (pu) mittels eines Umgebungsdrucksensors (15) und der Druck (psh) in einem Ansaugrohr (11) der Brennkraftmaschine (10) mittels eines Saugrohrdrucksensors (14) ermittelbar ist, und bei der die Funktionsfähigkeit des Umgebungsdrucksensors (15) von dem Steuergerät (16) **dadurch** überprüft wird, dass der Umgebungsdruck (pu) mit einem Startwert (psh_sta) verglichen wird (Block 38), der vor einem Anlassvorgang der Brennkraftmaschine (10) mittels des Saugrohrdrucksensors (14) gewonnen wird, wobei der Vergleich nur dann durchgeführt wird, wenn eine vorhergehende Überprüfung des Saugrohrdrucksensors (14) zu dem Ergebnis führt, dass dieser funktionsfähig ist - (B_sidss, B_drsidss), **dadurch gekennzeichnet, dass** die Überprüfung der Funktionsfähigkeit des Umgebungsdrucksensors (15) nur dann vorgenommen wird, wenn ein Anlassvorgang der Brennkraftmaschine (10) angestoßen wurde.

13. Brennkraftmaschine (10) insbesondere für ein Kraftfahrzeug, bei der der Umgebungsdruck (pu) mittels eines Umgebungsdrucksensors (15) und der Druck (psh) in einem Ansaugrohr (11) der Brennkraftmaschine (10) mittels eines Saugrohrdrucksensors (14) ermittelbar ist, und bei der die Funktionsfähigkeit des Umgebungsdrucksensors (15) von einem Steuergerät (16) **dadurch** überprüft wird, dass der Umgebungsdruck (pu) mit einem Startwert (psh_sta) verglichen wird (Block 38), der vor einem Anlassvorgang der Brennkraftmaschine (10) mittels des Saugrohrdrucksensors (14) gewonnen wird, wobei der Vergleich nur dann durchgeführt wird, wenn eine vorhergehende Überprüfung des Saugrohrdrucksensors (14) zu dem Ergebnis führt, dass dieser funktionsfähig ist (B_sidss, B_drsidss), **dadurch gekennzeichnet, dass** die Überprüfung der Funktionsfähigkeit des Umgebungsdrucksensors (15) nur dann vorgenommen wird, wenn ein Anlassvorgang der Brennkraftmaschine (10) angestoßen wurde.

## Claims

1. Method for operating an internal combustion engine (10) in which a pressure sensor (15) is provided which, before a starting process of the internal combustion engine (10), is connected to the environment, in which method an associated pressure (pu) is determined by the pressure sensor (15), in which method a pressure (psh) in an intake pipe (11) of the internal combustion engine (10) is determined by means of an intake pipe pressure sensor (14), and in which method the functional capability of the pressure sensor (15) is checked by virtue of the pressure (pu) determined by the pressure sensor (15) being compared (block 38) with a start value (psh_sta) which is obtained by means of the intake pipe pressure sensor (14) before the starting process of the internal combustion engine (10), with the comparison being carried out only if a preceding check of the intake pipe pressure sensor (14) yields the result that the latter is functionally capable (B_sidss, B_drsidss), **characterized in that** the check of the functional capability of the pressure sensor (15) is carried out only if a starting process of the internal combustion engine (10) has been initiated.

2. Method according to Claim 1, **characterized in that** an ambient pressure sensor (15) is provided as a pressure sensor.

3. Method according to Claim 2, **characterized in that** the check of the functional capability of the ambient pressure sensor (15) is carried out only if one or more of the following enable conditions is/are additionally met (B_psidss): i) the ignition of the internal combustion engine (10) has recently been switched on, ii) the actual rotational speed (nist) of the internal combustion engine (10) is in a desired rotational speed range, iii) a throttle flap (13) of the internal combustion engine (10) is open no further than a maximum throttle flap angle (WDKBAST), iv) the starting process has not yet exceeded a predefined time duration (SY_TSIDSS).

4. Method according to one of Claims 2 or 3, **characterized in that**, to check the intake pipe pressure sensor (14), a start value (psh_sta) is measured by means of the intake pipe pressure sensor (14) and stored before the starting process of the internal combustion engine (10), **in that** after the starting process, said start value (psh_sta) is compared with the pressure (psh) in the intake pipe (11), and **in that** the intake pipe pressure sensor (14) is regarded as being functionally capable if the difference between the start value (psh_sta) and the pressure (psh) exceeds a minimum value (DPDDF).

5. Method according to one of Claims 2 to 4, **characterized in that** the comparison of the ambient pressure (pu) with the start value (psh_sta) (block 38) is carried out only if the following enable condition is additionally met (B_ppldsu): the ignition of the internal combustion engine (10) has recently been switched on.

6. Method according to one of Claims 2 to 5, **characterized in that** the ambient pressure sensor (15) is regarded as being functionally capable if the difference between the start value (psh_sta) and the ambient pressure (pu) does not exceed a maximum value (DPMAX).

7. Method according to one of Claims 2 to 6, **characterized in that**, in the event of a malfunction of the ambient pressure sensor (15) being detected, the stored start value (psh_sta) is used as the ambient pressure.

8. Method according to one of Claims 2 to 7, **characterized in that**, in addition and/or as an alternative to the start value (psh_sta) derived from the intake pipe pressure sensor (14) and stored, use is made of a start value (pll_sta) derived from a charge air pressure sensor and stored before the starting process.

9. Method according to Claim 1, **characterized in that** a charge air pressure sensor or an air filter pressure sensor or the like is provided as a pressure sensor.

10. Computer program having program commands which carry out all the steps of the method according to one of the preceding claims if executed on a computer.

11. Computer program according to Claim 10, which computer program is stored on an electronic storage medium, in particular a flash memory.

12. Control unit (16) for an internal combustion engine (10), in which the ambient pressure (pu) can be determined by means of an ambient pressure sensor (15) and the pressure (psh) in an intake pipe (11) of the internal combustion engine (10) can be determined by means of an intake pipe pressure sensor (14), and in which the functional capability of the ambient pressure sensor (15) is checked by the control unit (16) by virtue of the ambient pressure (pu) being compared (block 38) with a start value (psh_sta) obtained by means of the intake pipe pressure sensor (14) before a starting process of the internal combustion engine (10), with the comparison being carried out only if a preceding check of the intake pipe pressure sensor (14) yields the result that the latter is functionally capable (B_sidss, B_drsidss), **characterized in that** the check of the functional capability of the ambient pressure sensor (15) is carried out only if a starting process of the internal combustion engine (10) has been initiated.

13. Internal combustion engine (10), in particular for a motor vehicle, in which the ambient pressure (pu) can be determined by means of an ambient pressure sensor (15) and the pressure (psh) in an intake pipe (11) of the internal combustion engine (10) can be determined by means of an intake pipe pressure sensor (14), and in which the functional capability of the ambient pressure sensor (15) is checked by a control unit (16) by virtue of the ambient pressure (pu) being compared (block 38) with a start value (psh_sta) obtained by means of the intake pipe pressure sensor (14) before a starting process of the internal combustion engine (10), with the comparison being carried out only if a preceding check of the intake pipe pressure sensor (14) yields the result that the latter is functionally capable (B_sidss, B_drsidss), **characterized in that** the check of the functional capability of the ambient pressure sensor (15) is carried out only if a starting process of the internal combustion engine (10) has been initiated.

## Revendications

1. Procédé de gestion d'un moteur à combustion interne (10) dans lequel un détecteur de pression (15) est prévu et communique avec l'environnement avant une opération de démarrage du moteur à combustion interne (10), une pression (pu) associée est déterminée par le détecteur de pression (15), une pression (psh) qui règne dans un tube d'admission (11) du moteur à combustion interne (10) étant déterminée au moyen d'un détecteur (14) de pression dans le tube d'admission,
le bon fonctionnement du détecteur de pression (15) étant vérifié en comparant (bloc 38) la pression (pu) déterminée par le détecteur de pression (15) à une valeur initiale (psh_sta) qui a été obtenue au moyen du détecteur (14) de pression dans le tube d'admission avant l'opération de démarrage du moteur à combustion interne (10), la comparaison étant exécutée uniquement lorsqu'une vérification précédente du détecteur (14) de pression dans le tube d'admission a donné le résultat que ce dernier fonctionne correctement (B_sidss, B_drsidss), **caractérisé en ce que** la vérification du bon fonctionnement du détecteur de pression (15) n'est réalisée que si une opération de démarrage du moteur à combustion interne (10) a été lancée.

2. Procédé selon la revendication 1, **caractérisé en ce qu'**un détecteur (15) de pression de l'environnement est prévu comme détecteur de pression.

3. Procédé selon la revendication 2, **caractérisé en ce que** la vérification du bon fonctionnement du détecteur (15) de pression de l'environnement n'est effectuée que si une ou plusieurs des conditions d'autorisation suivantes sont en outre satisfaites (B_psidss) : i) l'allumage du moteur à combustion interne (10) a été rebranché, ii) le régime de rotation effectif (nist) du moteur à combustion interne (10) est situé dans une plage souhaitée de vitesse de rotation, iii) un clapet d'étranglement (13) du moteur à combustion interne (10) n'est pas ouvert plus largement qu'un angle maximum de clapet d'étranglement (WDKBAST) et iv) l'opération de démarrage n'a pas encore dépassé une durée prédéterminée (SY_TSIDSS).

4. Procédé selon l'une des revendications 2 ou 3, **caractérisé en ce que** pour vérifier le détecteur (14) de pression dans le tube d'admission, une valeur initiale (psh_sta) est détectée par le détecteur (14) de pression dans le tube d'admission et conservée en mémoire avant l'opération de démarrage du moteur à combustion interne (10), cette valeur initiale (psh_sta) étant comparée après l'opération de démarrage à la pression (psh) qui règne dans le tube d'admission (11), le détecteur (14) de pression dans le tube d'admission étant détecté comme fonctionnant correctement si la différence entre la valeur initiale (psh_sta) et la pression (psh) dépasse une valeur minimale (DPDDF).

5. Procédé selon l'une des revendications 2 à 4, **caractérisé en ce que** la comparaison de la pression de l'environnement (pu) avec la valeur initiale (psh_sta) (bloc 38) n'est exécutée que si la condition suivante d'autorisation est en outre satisfaite (B_ppldsu) : l'allumage du moteur à combustion interne (10) a été rebranché.

6. Procédé selon l'une des revendications 2 à 5, **caractérisé en ce que** le détecteur (15) de pression de l'environnement est détecté comme fonctionnant correctement si la différence entre la valeur initiale (psh_sta) et la pression (pu) de l'environnement ne dépasse pas une valeur maximale (DPMAX).

7. Procédé selon l'une des revendications 2 à 6, **caractérisé en ce que** lorsqu'un fonctionnement défectueux du détecteur (15) de pression de l'environnement est détecté, la valeur initiale (psh_sta) conservée en mémoire est utilisée comme pression de l'environnement.

8. Procédé selon l'une des revendications 2 à 7, **caractérisé en ce qu'**en complément et/ou en variante à la valeur initiale (psh_sta) dérivée du détecteur (14) de pression dans le tube d'admission et conservée en mémoire, une valeur initiale (pll_sta) déduite du détecteur de pression de l'air de suralimentation et conservée en mémoire avant l'opération de démarrage est utilisée.

9. Procédé selon la revendication 1, **caractérisé en ce qu'**un détecteur de pression de l'air de suralimentation ou un détecteur de pression dans le filtre à air ou similaires sont prévus comme détecteur de pression.

10. Programme informatique doté de commandes de programme qui exécutent toutes les étapes du procédé selon l'une des revendications précédentes lorsqu'il est exécuté sur un ordinateur.

11. Programme informatique selon la revendication 10, conservé en mémoire sur un support électronique de mémoire, en particulier une mémoire flash.

12. Appareil de commande (16) pour moteur à combustion interne (10), dans lequel la pression de l'environnement (pu) peut être déterminée au moyen d'un détecteur (15) de pression de l'environnement et la pression (psh) qui règne dans le tube d'admission (11) du moteur à combustion interne (10) peut être déterminée au moyen d'un détecteur (14) de pression dans le tube d'admission et dans lequel le bon fonctionnement du détecteur (15) de pression de l'environnement est vérifié par l'appareil de commande (16) en comparant la pression de l'environnement (pu) à une valeur initiale (psh_sta) (bloc 38) qui a été obtenue au moyen du détecteur (14) de pression dans le tube d'admission avant une opération de démarrage du moteur à combustion interne (10), la comparaison n'étant exécutée que si une vérification précédente du détecteur (14) de pression dans le tube d'admission a donné pour résultat que ce dernier fonctionne correctement (B_sidss, B_drsidss), **caractérisé en ce que** la vérification du bon fonctionnement du détecteur (15) de pression de l'environnement n'est réalisée que si une opération de démarrage du moteur à combustion interne (10) a été lancée.

13. Moteur à combustion interne (10), en particulier pour véhicule automobile, dans lequel la pression de l'environnement (pu) peut être déterminée au moyen d'un détecteur (15) de pression de l'environnement et la pression (psh) qui règne dans le tube d'admission (11) du moteur à combustion interne (10) peut être déterminée au moyen d'un détecteur (14) de pression dans le tube d'admission et dans lequel le bon fonctionnement du détecteur (15) de pression de l'environnement est vérifié par l'appareil de commande (16) en comparant la pression de l'environnement (pu) à une valeur initiale (psh_sta) (bloc 38) qui a été obtenue au moyen du détecteur (14) de pression dans le tube d'admission avant une opération de démarrage du moteur à combustion interne (10), la comparaison n'étant exécutée que si une vérification précédente du détecteur (14) de pression dans le tube d'admission a donné pour résultat que ce dernier fonctionne correctement (B_sidss, B_drsidss), **caractérisé en ce que** la vérification du bon fonctionnement du détecteur (15) de pression de l'environnement n'est réalisée que si une opération de démarrage du moteur à combustion interne (10) a été lancée.
